# EUROPÄISCHE PATENTANMELDUNG

(11) **EP 3 932 838 A1**
(43) Veröffentlichungstag der Anmeldung: **05.01.2022**
(21) Anmeldenummer: 20182950.4
(22) Anmeldetag: 29.06.2020
(51) Int. Cl.: B65G 47/84, B65G 54/02

(54) **VERFAHREN UND FÖRDERSYSTEM ZUM MANIPULIEREN VON STÜCKGÜTERN AUF EINER FÖRDERSTRECKE**

(71) Anmelder: Siemens Aktiengesellschaft, 80333 München (DE)
(72) Erfinder: BARTH, Thomas, 78244 Gottmadingen (DE); PRIMS, Domenik, 78315 Radolfzell am Bodensee (DE)
(74) Vertreter: Siemens Patent Attorneys

(57) **Zusammenfassung**

Die Erfindung offenbart ein Fördersystem (2) und ein Verfahren zum Manipulieren von Stückgütern (4), insbesondere Paketen und Gepäckstücken. Eine Förderstrecke (8) führt durch einen Manipulationsbereich (6) hindurch und ist angeordnet zumindest teilweise entlang einer umlaufenden Führungsvorrichtung (10) mit Laufelementeinheiten (12) und diesen bewegenden linearen Antriebsmitteln. Das Verfahren umfasst: Einbringen eines Stückguts (4) und einer der Laufelementeinheiten (12) stromaufwärts in den Manipulationsbereich (6). Bewegen einer der Laufelementeinheiten (12) hin zu dem Stückgut (4), so dass ein Berührungskontakt hergestellt wird. Bewegen der Laufelementeinheit (12) stromabwärts entlang der Führungsvorrichtung (10). Manipulieren des Stückguts (4) durch Bewegen der Laufelementeinheit (12) im Berührungskontakt mit dem Stückgut (4) mit Bewegungskomponenten entlang und/oder quer zur Führungsvorrichtung (10). Antreiben der Laufelementeinheit (12), so dass die Laufelementeinheit (12) das Stückgut (4) aus dem Manipulationsbereich (6) hinausschiebt. Die Laufelementeinheit (12) verlässt stromabwärts den Manipulationsbereich (6) und wird entlang der Führungsvorrichtung (10) bis vor den Anfang des Manipulationsbereichs (6) bewegt.

## Beschreibung

Die vorliegende Erfindung betrifft das technische Gebiet der Fördersysteme für Stückgüter, insbesondere Pakete und Gepäckstücke, speziell den Bereich der Logistik- und Sortiersysteme.

In der Stückgutlogistik, beispielsweise in Paket-Sortierzentren oder Flughafen-Gepäckfördersystemen, ist eine hohe Positionsgenauigkeit entscheidend für den Durchsatz und für die Zuverlässigkeit des gesamten Fördersystems. Sortierprozesse erfordern zunächst das Einstellen eines definierten Stückgutabstands. Das Abgaben von Stückgütern von einer Förderstrecke oder einem Tragmittel auf Endstellen muss zeitlich und örtlich exakt durchgeführt werden.

In Vorbereitung von der Sortierung von Stückgütern wie Gepäckstücken oder Paketen ist eine Identifizierung notwendig, um das Stückgut der entsprechenden Zielstelle zuzuordnen. Zusätzlich muss das Stückgut oft gewogen werden. Dafür ist eine definierte Lücke zwischen den Stückgütern erforderlich, die nach der Stückgutvereinzelung eingestellt werden muss.

Das Einstellen definierter Stückgutlücken wird mit nacheinander geschalteten, sequenziell beschleunigten Taktbändern erzielt. Dies erfordert viel Platz und Gurtfördertechnik heranziehende Lösungen können häufig nicht schlupffrei, insbesondere an den Übergängen zwischen zwei Taktförderbändern, umgesetzt werden. An den Übergängen treten Geschwindigkeitssprünge auf. Ein Hauptgrund dafür ist, dass die Stückgüter mit der eingesetzten Gurtfördertechnik reibschlüssig beeinflusst werden. Daher ist die Zuverlässigkeit dieser Lösungen eingeschränkt und es müssen häufig aufwändige

Visionssysteme zum Einsatz kommen. Auf diese sind auch Pick-By-Robot Konzepten mit speziellen Greifrobotern angewiesen, da sie ein zuverlässiges Erkennen und Greifen erfordern.

Zur Sortierung von Stückgütern wie Paketen oder Gepäckstücken mit einem Sorter kommen Förderstrecken mit hintereinander laufenden Tragmitteln (Carrier eines Cross-Belt-Sorters, Schale eines Kippschalensorters, Tasche eines Taschensorters, AGV eines Mobile-Robot-Systems, ...) zur Aufnahme und Ausschleusung einzelner Stückgüter zum Einsatz.

Damit ein Tragmittel das (bereits vereinzelte) Stückgut aufnehmen kann, ist ein Induktionsbereich notwendig. Die Induktion des Stückguts auf das Tragmittel kann nur erfolgen, wenn ein Tragmittel nicht belegt ist. Ist ein Tragmittel frei, wird es für die Belegung mit dem aktuellen Stückgut allokiert. Dieses muss für die Induktion auf Transportgeschwindigkeit des Tragmittels beschleunigt werden. Da eine optimale Ausrichtung des Stückguts zur Förderrichtung des Tragmittels oft nicht gewährleistet werden kann, muss für die Auslegung der Größe des Lastaufnahmemittels eine schräge Stückgut-Lage berücksichtigt werden. Bei einem inhomogenen Stückgut-Spektrum muss die Größe des Lastaufnahmemittels auf das größte Stückgut ausgelegt werden. Dadurch erhöht sich die Tragmittel-Teilung und der Durchsatz wird gesenkt. Häufig müssen die Tragmittel für die Beladung mit dem Stückgut anhalten oder zumindest verlangsamt werden. Dies senkt den Durchsatz. Alternativ wird eine nicht triviale High-Speed-Induktion durchgeführt.

Stand der Technik ist die Ausstattung von jedem Tragmittel mit einem aktiven Lastaufnahmemittel (Cross-Belt eines Quergurt-Sorters, Kippschale eines Kippschalen-Sorters, AGV mit Cross-Belt, ...), um die Stückgutübergabe an die Endstelle (und in einigen Anwendungsfällen auch die Stückgut-Induktion) umzusetzen. Dies erhöht die Kosten pro Lastaufnahmemittel. Alternativ wird jede Endstelle mit einer aktiven Entladeeinheit ausgerüstet (Pusher, ...) wodurch sich die Kosten mit der Anzahl der Endstellen erhöhen. Zusätzlich werden eine oder mehrere aktive Einheiten eingesetzt, um die Tragmittel einzeln oder als mechanisch gekoppelte Kette anzutreiben. Beim AGV weist jedes Tragmittel eine zusätzliche aktive Einheit für die Fortbewegung (Bsp.: AGV) auf. Die Anzahl der aktiven Einheiten ist bei einem Sorter entsprechend hoch.

Der vorliegenden Erfindung liegt daher die Aufgabe zugrunde, eine verbesserte Lösung für die Manipulation von Stückgütern in Fördersystemen bereitzustellen. Diese Aufgabe wird durch die in den unabhängigen Ansprüchen beschriebenen Lösungen gelöst. Vorteilhafte Ausgestaltungen der Erfindung ergeben sich aus den Unteransprüchen.

Die erfindungsgemäße Lösung betrifft ein Verfahren zum Manipulieren von Stückgütern, insbesondere Paketen und Gepäckstücken, in einem Manipulationsbereich eines Fördersystem, umfassend eine Förderstrecke und eine umlaufende Führungsvorrichtung mit Antriebsmitteln und Laufelementeinheiten. Die Laufelementeinheiten sind in einer Flussrichtung entlang der Führungsvorrichtung mit individuell ansteuerbarer Geschwindigkeit bewegbar befestigt und von der Führungsvorrichtung antreibbar. Der Manipulationsbereich ist entlang und insbesondere auch auf einem Abschnitt der Führungsvorrichtung angeordnet. Die Förderstrecke führt durch den Manipulationsbereich hindurch und ist zumindest teilweise entlang der Führungsvorrichtung angeordnet. Das Verfahren umfasst die Verfahrensschritte:
a) Einbringen eines Stückguts auf der Förderstrecke und Einbringen einer der Laufelementeinheiten stromaufwärts in den Manipulationsbereich.
b) Bewegen einer der Laufelementeinheiten hin zu dem Stückgut, so dass ein Berührungskontakt hergestellt wird.
c) Bewegen der Laufelementeinheit stromabwärts mit einer Bewegungskomponente entlang der Führungsvorrichtung.
d) Manipulieren des Stückguts im Manipulationsbereich durch Bewegen der Laufelementeinheit im Berührungskontakt mit dem Stückgut mit Bewegungskomponenten entlang und/oder quer zur Führungsvorrichtung, so dass eine definierte Lücke und/oder Teilung zwischen einander nachfolgenden Stückgütern eingestellt und/oder eine Ausrichtung und/oder Position des Stückguts verändert wird.
e) Antreiben der Laufelementeinheit, so dass die Laufelementeinheit das Stückgut aus dem Manipulationsbereich hinausschiebt.
f) Die Laufelementeinheit verlässt stromabwärts den Manipulationsbereich.
g) Bewegen der Laufelementeinheit entlang der Führungsvorrichtung außerhalb des Manipulationsbereichs bis vor den Anfang des Manipulationsbereichs.

Unter einem Manipulieren des Stückguts durch die Laufelementeinheit soll jegliche Bewegung des Stückguts verstanden werden, die das Stückgut erfährt während es sich im Berührungskontakt mit der Laufelementeinheit befindet. Das Manipulieren eines Stückguts, u.U. abgestimmt mit dem Manipulieren vorausgehender und/oder nachfolgender Stückgüter durch weitere Laufelementeinheiten, stellt eine definierte Lücke und/oder Teilung zwischen einander nachfolgenden Stückgütern ein und/oder verändert Ausrichtung und/oder Position des Stückguts.

Unter einer umlaufenden Führungsvorrichtung soll insbesondere eine endlos umlaufende Führungsvorrichtung verstanden werden, die zumindest einen Manipulationsabschnitt entlang dem Manipulationsbereich und einen Rückführbereich aufweist. Die Führungsvorrichtung kann vorzugsweise eine Führungsschiene umfassen. Der Rückführbereich dient dazu, die Laufelementeinheiten nachdem sie das stromabwärts gelegene Ende des Manipulationsbereich verlassen haben hin zum stromaufwärts gelegenen Anfang des Manipulationsbereich zu führen. Der Rückführbereich kann auf gleicher und/oder unterschiedlicher Höhe geführt werden. Es ist auch möglich, dass mehrere eigene Manipulationsabschnitte einen gemeinsamen Rückführbereich teilen. Die Geschwindigkeit der Laufelementeinheit kann individuell angesteuert und variiert werden. Damit möglichst wenige Laufelementeinheiten benötigt werden, ist eine möglichst schnelles Durchfahren des Rückführbereichs vorteilhaft. Die Antriebsmittel sollen insbesondere lineare Antriebsmittel umfassen. Das Einbringen eines Stückguts und einer der Laufelementeinheiten stromaufwärts in den Manipulationsbereich kann je nach genauer Ausgestaltung sequenziell in wahlfreier Reihenfolge oder im Wesentlichen gleichzeitig erfolgen. Gleiches gilt für das Verlassen des Manipulationsbereichs. Die Laufelementeinheiten sind während des ganzen Verfahrens mit der Führungsvorrichtung verbunden. Unter einem Berührungskontakt soll insbesondere auch eine lösbare formschlüssige Verbindung verstanden werden. Unter Schieben soll auch ein gemeinsames Bewegen mit gleicher Geschwindigkeit von Stückgut und Laufelementeinheit verstanden werden ohne dass die Laufelementeinheit das Stückgut tatsächlich aktiv anschiebt.

Die Laufelementeinheit wird entlang der Führungsvorrichtung in Flussrichtung durch den Manipulationsbereich hindurch bewegt vom stromaufwärts gelegenen Anfang zum stromabwärts gelegenen Ende des Manipulationsbereichs. Je nach Ausgestaltung kann das Stückgut in Flussrichtung oder seitlich am Ende des Manipulationsbereich aus diesem ausgeschleust werden oder seitlich ausgeschleust werden an wahlfreier Position entlang der Führungsvorrichtung, also nicht zwingend am Ende des Manipulationsbereichs. Die Stückgüter werden aus dem Manipulationsbereich hin zu Endstellen oder eine weitere Fördervorrichtung ausgeschleust oder befinden sich weiter auf der ursprünglichen Förderstrecke.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Gemäß einer Ausführungsform kann ein Bewegen der Laufelementeinheit im Berührungskontakt mit dem Stückgut mit einer Bewegungskomponente quer zur Führungsvorrichtung innerhalb des Manipulationsbereichs erfolgen, so dass das Stückgut seitlich zur Flussrichtung aus dem Manipulationsbereich ausgeschleust wird. Die Laufelementeinheit kann sehr exakt angesteuert werden, so dass das Stückgut an definierter Position seitlich ausgeschleust werden kann. Vor dem seitlichen Ausschleusen kann das Stückgut zunächst noch stromaufwärts vom Anfang des Manipulationsbereich in Richtung des Ende des Manipulationsbereichs (aber nicht notwendigerweise bis zum Ende hin) bewegt werden.

Um einfach ansteuerbar und ohne komplizierte Bauelemente Bewegungskomponenten der Laufelementeinheit entlang und allenfalls quer zur Flussrichtung zu ermöglichen, kann eine Laufelementeinheit jeweils ein oder zwei individuell entlang der Führungsvorrichtung bewegbare Laufelemente und mindestens ein Anschiebelement aufweisen, wobei das Anschiebelement derart mit den zwei Laufelementen verbunden ist, dass eine Veränderung des Abstands zwischen den zwei Laufelementen das Anschiebelement quer zur Flussrichtung bewegt. Eine Laufelementeinheit kann also ein oder mehrere auf der Führungsvorrichtung befestigte und nur entlang der Führungsvorrichtung bewegbare Laufelemente aufweisen. Das Anschiebelement wird für den Berührungskontakt auf die Stückgüter des Fördersystems optimiert dimensioniert ausgestaltet. Bei nur einem Laufelement kann die Anschiebelement von dem Laufelement umfasst sein.

Es kann ein Bewegen der Laufelementeinheit durch Erzeugung elektromagnetischer Wanderfelder mit von den Antriebsmittel umfassten elektromagnetischen Spulen erfolgen, wobei die Laufelementeinheit einen Magnet umfassen kann. Die Laufelementeinheit benötigt so keine aktiven Einheiten, um hochgradig präzise und individuell angesteuert zu werden.

Gemäß einer Ausführungsform kann die Förderstrecke abschnittsweise zum aktiven und/oder passiven Fördern eines Stückguts ausgestaltet sein. Wenn der im Manipulationsbereich liegende Abschnitt der Förderstrecke passiv ausgestaltet wird, können die Stückgüter im Manipulationsbereich von den Laufelementeinheiten, d.h. angeschoben durch die Anschiebelemente, bewegt werden und die Förderstrecke im Manipulationsbereich wird vorzugsweise als glatte Förderfläche mit möglichst wenig Reibung zwischen Förderfläche und Stückgut ausgestaltet. Die Förderstrecke kann durchgehend dieselbe Fördertechnik (Förderband, hintereinander angeordnete Tragelemente, Transportrollen), evtl. abschnittsweise unterteilt, aufweisen oder abschnittsweise unterschiedliche Fördertechniken aufweisen. Die Förderstrecke führt durch den Manipulationsbereich hindurch und kann daher vorteilhafterweise aufgeteilt werden in Zuführförderstrecke flussaufwärts vor dem Manipulationsbereich, Manipulationsförderstrecke im Manipulationsbereich und Abführförderstrecke flussabwärts nach dem Manipulationsbereich.

Gemäß einer Ausführungsform kann im Manipulationsbereich Anschieben und/oder Veränderung der Ausrichtung des Stückguts durch Berührungskontakt mit der Laufelementeinheit erfolgen. So kann der Abstand einander nachfolgender Stückgüter eingestellt werden und ihre Positionierung auf der Förderstrecke beeinflusst werden.

Um Stückgüter auf beide Seiten der Förderstrecke hin auszuschleusen und/oder noch mehr Manipulationsmöglichkeiten und/oder -kapazitäten zu erzielen, kann das Fördersystem mehr als eine erfindungsgemäße Führungsvorrichtung umfassen, wobei die zweite Führungsvorrichtung zumindest teilweise entlang dem Manipulationsbereich gegenüber der ersten Führungsvorrichtung angeordnet ist oder einen eigenen Manipulationsbereich aufweist.

Gemäß einer Ausführungsform kann ein aufeinander abgestimmtes Bewegen von zwei oder mehr Laufelementeinheiten, insbesondere von einander nachfolgenden Laufelementeinheiten, erfolgen. So können definierte Abstände (definierte Lücke und/oder Teilung) zwischen einander nachfolgenden Stückgütern besonders effizient eingestellt werden.

Gemäß einer Ausführungsform kann das mindestens eine Anschiebelement, welches beispielsweise Haken-, U- oder L-förmig oder linear ist, zum Anschieben der Stückgüter seitlich und/oder quer zur Führungsvorrichtung ausgestaltet sein.

Hinsichtlich einer Vorrichtung wird die vorstehend genannte Aufgabe gelöst durch ein Fördersystem zum Manipulieren von Stückgütern, insbesondere Paketen und Gepäckstücken, umfassend eine umlaufende Führungsvorrichtung mit linearem Antriebsmittel und Laufelementeinheiten, einen Manipulationsbereich und eine Förderstrecke. Die Laufelementeinheiten sind an der Führungsvorrichtung bewegbar befestigt und von dem Antriebsmittel der Führungsvorrichtung mit individuell ansteuerbarer Geschwindigkeit in einer Flussrichtung entlang der Führungsvorrichtung antreibbar. Der Manipulationsbereich ist entlang und insbesondere auch auf einem Abschnitt der Führungsvorrichtung angeordnet. Die Förderstrecke führt durch den Manipulationsbereich hindurch und ist im Manipulationsbereich zum aktiven oder passiven Fördern der Stückgüter ausgestaltet. Jede Laufelementeinheit ist außerhalb des Manipulationsbereichs auf der Führungsvorrichtung hin zu einem vor einem stromaufwärts angeordneten Bereich des Manipulationsbereichs bewegbar. Jede Laufelementeinheit ist ausgestaltet zum Manipulieren eines Stückguts im Manipulationsbereich durch Bewegen der Laufelementeinheit im Berührungskontakt mit dem Stückgut mit Bewegungskomponenten entlang und/oder quer zur Führungsvorrichtung so dass eine definierte Lücke und/oder Teilung zwischen einander nachfolgenden Stückgütern eingestellt und/oder eine Ausrichtung und/oder Position des Stückguts verändert wird. Zudem ist jede Laufelementeinheit ausgestaltet, ein Stückgut seitlich und/oder stromabwärts aus dem Manipulationsbereich hinaus zu schieben.

Das Fördersystem weist, soweit übertragbar, die gleichen Vorteile auf, welche bezüglich des vorgestellten Verfahrens aufgeführt sind.

Gemäß einer Ausführungsform kann können die Laufelementeinheiten Magnete und das Antriebsmittel elektromagnetische Spulen umfassen, um die Laufelementeinheiten durch Erzeugung elektromagnetischer Wanderfelder zu bewegen.

Gemäß einer weiteren Ausführungsform kann eine Laufelementeinheit jeweils ein oder zwei individuell entlang der Führungsvorrichtung bewegbare Laufelemente und mindestens ein Anschiebelement aufweisen, wobei das Anschiebelement derart mit den zwei Laufelementen, insbesondere über gelenkartig angebrachte Verbindungsstangen, verbunden sein kann, so dass eine Veränderung des Abstands zwischen den Laufelementen das Schiebelement quer zur Flussrichtung bewegt.

Um ein Manipulieren ausgehend von mehr als einer Seite zu ermöglichen, kann das Fördersystem zwei Führungsvorrichtungen aufweisen, die zumindest teilweise auf gegenüberliegenden Seiten des Manipulationsbereich angeordnet sind oder die jeweils eigene Manipulationsbereiche und eigene Förderstrecken aufweisen.

Die Förderstrecke kann im Manipulationsbereich hintereinander angeordnete Tragmittel aufweisen. So kann ein Crossbelt-Sorter realisiert werden.

Gemäß einer Ausführungsform kann das Schiebelement zum Anschieben der Stückgüter seitlich und/oder quer zur Führungsvorrichtung mit mindestens einem Anschiebelement, welches beispielsweise Haken-, U- oder L-förmig oder linear ist, ausgestaltet sein.

Gemäß einer Ausführungsform kann die Führungsvorrichtung außerhalb des Manipulationsbereich auf Höhe oder unterhalb der Förderstrecke angeordnet sein.

Ausführungsformen der Erfindung werden nachfolgend anhand der Figuren beispielsweise näher erläutert. Dabei zeigen:
- Figur 1: eine Führungsvorrichtung;
- Figuren 2: bis 4 formschlüssige Aufnahme und Anschieben von Stückgütern von hinten zur Korrektur von Ausrichtung und Abstand;
- Figur 5: seitliches Ausschleusen mit Laufelementeinheiten jeweils umfassend zwei Laufelemente und ein Anschiebelement;
- Figuren 6: bis 11 Variationen in Anordnung, Anzahl und Ausgestaltung von Förderstrecken, Laufelementeinheiten, Führungsvorrichtungen und Manipulationsbereichen.

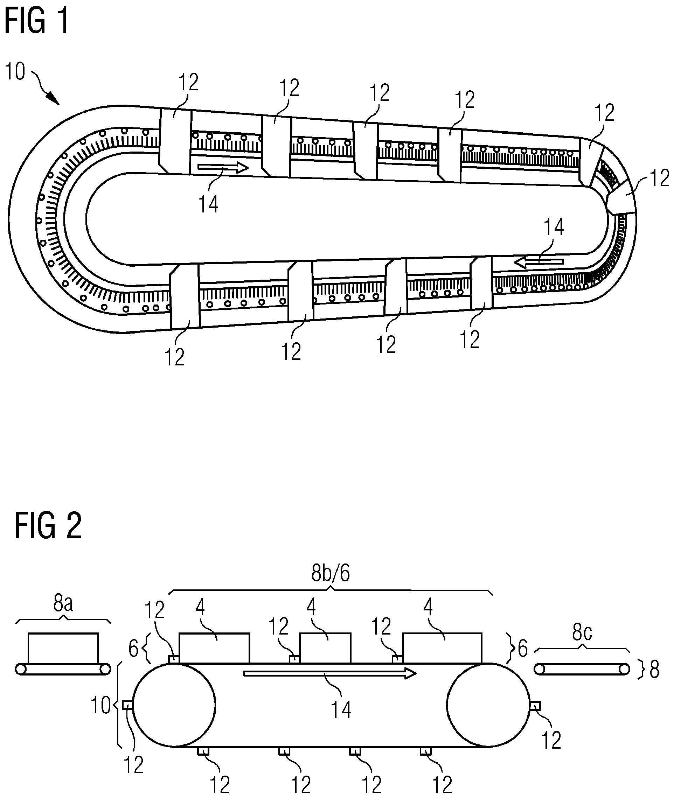

Figur 1 zeigt eine als Linearantriebssystem ausgestaltete Führungsvorrichtung 10 entlang und auf der Laufelementeinheiten 12 individuell ansteuerbar bewegt werden können. In der Führungsvorrichtung 10 verbaut sind ein modularer Linearmotor mit Leistungselektronik und Wegerfassung. Zum Antrieb der Magnete umfassenden Laufelementeinheiten 12 werden in der Führungsvorrichtung 10 verbaute elektromagnetische Spulen herangezogen, die elektromagnetische Wanderfelder erzeugen, so dass Geschwindigkeit und Position der Laufelementeinheiten 12 hoch präzise bestimmt werden kann. Die Lauf-/Flussrichtung 14 kann an das Fördersystem 2 angepasst gewählt werden und die Führungsvorrichtung 10 agiert als Führungsschiene. Die Führungsvorrichtung 10 wird modular verbaut, so dass hohe Flexibilität bei der Auswahl der Linienführung der Führungsvorrichtung 10 besteht. Eine erfindungsgemäße Förderstrecke 8 kann entlang und/oder auf der Führungsvorrichtung 10 angeordnet werden, wobei derjenige Bereich, in dem die Laufelementeinheiten 12 Position und/oder Ausrichtung von Stückgütern 4 auf der Förderstrecke 8 manipulieren kann, als Manipulationsbereich 6 bezeichnet wird.

Figur 2 zeigt in seitlicher Ansicht die formschlüssige Aufnahme der Stückgüter 4 durch auf und entlang einer Führungsvorrichtung 10 geführte Laufelementeinheiten 12, die mit linearer Antriebstechnologie unter der Manipulationsförderstrecke 8b zurückgeführt werden. Die Stückgüter 4 werden in Flussrichtung 14 auf einer flussaufwärts vor dem Manipulationsbereich 6 angeordneten Zuführförderstrecke 8a hin zur Manipulationsförderstrecke 8b geführt. Sobald das Stückgut 4 in den Manipulationsbereich 6 auf die Manipulationsförderstrecke 8b eintritt, wird eine Laufelementeinheit 12 von hinten formschlüssig an das Stückgut 4 angelegt. Die Laufelementeinheiten 12 können sehr rasch beschleunigt werden, bei heute konfektioniert erhältlichen Linearantriebssystemen mit bis zu 10 m/s2.

Die Manipulationsförderstrecke 8b kann bei dieser Ausführung als passive Fläche ausgeführt werden, über die die Stückgüter 4 mit den Laufelementeinheiten 12 angeschoben werden. Die Positionierung und Teilung der Stückgüter 4 wird durch individuelle Ansteuerung der einzelnen Laufelementeinheiten gezielt manipuliert. Ohne Information über die Stückgutdimension kann eine konstante Stückgut-Teilung erzeugt werden. Bei unterschiedlich langen Stückgütern 4 ergibt sich dadurch eine verschieden große Lücke zwischen den Stückgütern 4, durch entsprechende Ansteuerung der Laufelementeinheiten 12 unter Berücksichtigung der Stückgutdimensionen in Flussrichtung 14 kann eine konstante Lücke eingestellt werden.

Nachdem die Laufelementeinheiten 12 das Ende des Manipulationsbereichs 6b verlassen haben, werden sie unter den Stückgütern 4 und unter dem Manipulationsbereich 6 bis vor den Anfang des Manipulationsbereichs 6a gefahren. Dies kann mit hoher Geschwindigkeit geschehen, so dass möglichst wenig Laufelementeinheiten 12 benötigt werden.

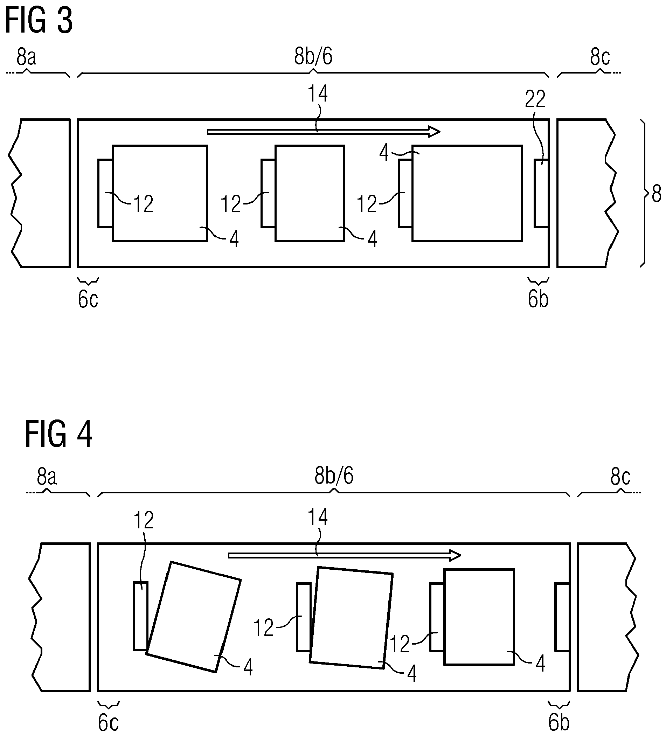

Figur 3 zeigt das Fördersystem 2 von Figur 2 in Aufsicht. Die Lücke zwischen zwei Stückgütern 4 wird realisiert, indem ein nachfolgendes Stückgut 4 bei Eintritt in die Gapping-Förderstrecke 8b bzw. den Manipulationsbereich 6 relativ zum vorausliegenden Stückgut 4 beschleunigt wird bis die gewünschte Teilung oder Lücke eingestellt ist. Anschließend werden beide Stückgüter 4 mit gleicher Geschwindigkeit weitertransportiert und aus dem Manipulationsbereich 6 ausgeschleust indem sie flussabwärts das Ende des Manipulationsbereichs 6b verlassen.

Figur 4 zeigt wie durch Anlegen und Beschleunigen der Laufelementeinheiten 12 die Stückgüter 4 im Manipulationsbereich 6 automatisch orthogonal zur Transportrichtung 14 ausgerichtet werden. Die mit linearen Antriebsmitteln angetrieben bewegte Laufelementeinheit 12 legt sich formschlüssig entweder an die längere oder kürzer Kante des Stückguts 4 an und das Stückgut 4 wird anschließend von der Laufelementeinheit 12 angeschoben. Mit einer von einem von dem Fördersystem 2 umfassten Detektions- bzw. Visionssystem erhaltenen Information über die Stückgutorientierung vor Eintritt in den Manipulationsbereich 6 ist klar, um welche Kante es sich handelt und damit wie die Laufelementeinheit positioniert werden muss, um eine definierte Lücke einzustellen. So werden zeitgleich Lage und Orientierung eines formschlüssig an der Laufelementeinheit 12 anliegenden Stückguts 4 manipuliert. Dadurch kann bei der Einstellung des Abstands (konstante Teilung oder Lücke) zwischen Stückgütern 4 eine bisher nicht realisierbare Genauigkeit erreicht werden ("Minimum-Gap-Ansatz"). Pro Stückgut 4 ist nur eine Laufelementeinheit 12 nötig, um sowohl Transport als auch Lückeneinstellung parallel auf dem Manipulationsbereich 6 vorzunehmen. Dadurch ist innerhalb des Manipulationsbereichs 6 keine aktive Fördertechnik notwendig, aber möglich.

So kann ein optimaler Durchsatz erzielt werden ohne irgendwelche puffernde Sicherheitsabstände, die bisher nötig waren, weil die Einstellung der Lücke nicht genau genug vorgenommen werden konnte. Dieser Minimum-Gap-Ansatz ist wichtig, um die Förderstrecke 8 optimal zu nutzen, wenn das Stückgutspektrum wie typischerweise im Päckchen- und Paketbereich üblich stark streut. Der Einsatz von hohen Beschleunigungen erlaubender linearer Antriebstechnik für die Lückeneinstellung erlaubt hohe Durchsätze. In Verbindung mit dem Formschluss der Laufelementeinheiten 12 ergibt sich dadurch eine - im Vergleich zur Stückgutmanipulation mit Förderbändern - schlupffrei und damit hoch präzise Manipulationsmöglichkeit.

Die in den Figuren 1 bis 4 gezeigten Laufelementeinheiten 12 ragen nicht über die Führungsvorrichtung 10 hinaus, so dass der Manipulationsbereich 6 komplett mit der Manipulationsförderstrecke 8b übereinstimmt und nicht nur entlang, sondern auch auf der Führungsvorrichtung 10 angeordnet ist. Die Figuren 1 bis 4 zeigen zudem nur ausschließlich eine Bewegung der Laufelementeinheiten 12 im Manipulationsbereich 6 entlang der Flussrichtung 14. Es ist auch möglich die Laufelementeinheiten 12 breiter als die Führungsvorrichtung 10 zu gestalten und die Manipulationsförderstrecke 8b und den Manipulationsbereich 6 entlang der Führungsvorrichtung 10 anzuordnen. Insbesondere dann ist eine semantische und strukturelle Unterteilung der Laufelementeinheit 12 sinnvoll in ein oder mehrere tatsächlich auf der Führungsvorrichtung 10 geführte Laufelemente 12a und ein mit dem oder den Laufelementen 12a - je nach Ausführung - fest oder beweglich verbundenes Anschiebelement 12b welches in Wirkübereinstimmung mit dem Stückgut 4 gebracht wird und dieses tatsächlich anschiebt.

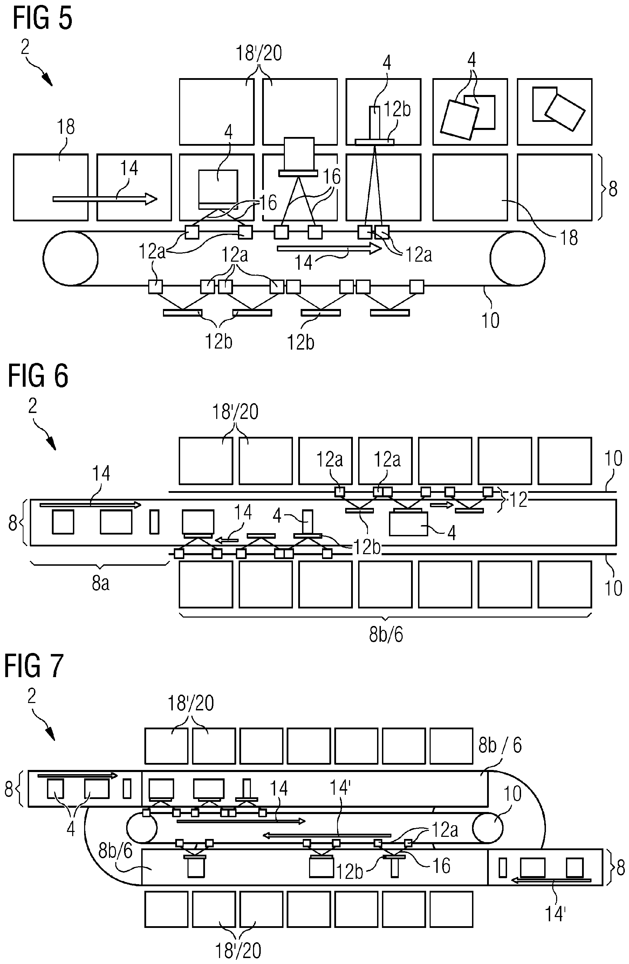

Die Figuren 5 bis 11 zeigen weitere erfindungsgemäße Ausführungen, bei denen die Stückgüter 4 seitlich ausgeschleust werden. Um auf einfache Weise Bewegungskomponenten der Laufelementeinheit 12 quer zur Flussrichtung 14 zu ermöglichen, umfassen die Laufelementeinheiten 12 je zwei nur auf und entlang der Führungsvorrichtung 10 bewegbare Laufelemente 12a und ein mit beiden Laufelementen 12a verbundenes Anschiebelement 12b. Laufelement 12a und Anschiebelement 12b sind über eine jeweils scharnierartig befestigte Verbindungsstange 16 verbunden, so dass eine Veränderung des Abstands zwischen den Laufelementen 12a das Anschiebelement 12b quer zur Flussrichtung 14 bewegt. Die zwei Laufelemente 12a einer Laufelementeinheit 12 sind logisch und über das Anschiebelement 12b mechanisch gekoppelt

Figur 5 zeigt ein erfindungsgemäßes Fördersystem 2 mit einer neben und entlang der Führungsvorrichtung 10 angeordneten Trag- bzw. Lastaufnahmemittel 18 aufweisende Förderstrecke 8, wobei die Stückgüter 4 formschlüssig von den Laufelementeinheiten 12 seitlich von den Tragmitteln 18 geschoben werden. Die Laufelementeinheiten 12 umfassen jeweils zwei Laufelemente 12a und ein Anschiebelement 12b, scharnierartig befestigt über eine Verbindungsstange 16 mit zusätzlicher Teleskopfunktion, so dass die Länge der Verbindungsstange 16 veränderbar ist. Das Anschiebelemente 12b von Figur 5 weisen eine lineare Form auf und sind entlang der Laufrichtung 14 angeordnet. Die ansteuerbare Teleskopfunktion erlaubt auch bei starker seitlicher Auslenkung der Anschiebelemente 12b geringe Abstände der Laufelemente 12a und ermöglicht so einen geringen Abstand einander nachfolgender Laufelementeinheiten 12 und somit einen erhöhten Durchsatz. Um ein Stückgut 4 ausschleusen zu können, wird eine Laufelementeinheit 12 beschleunigt bis es die Höhe des entsprechenden Tragmittels 18 erreicht hat, anschließend werden die Laufelementeinheit 12 und das Tragmittel 18 mit gleicher Geschwindigkeit entlang der Laufrichtung 14 bewegt. Zum Ausschleusen (Induktion) wird der Abstand der Laufelemente 14a zueinander verringert während ihrer Bewegung entlang der Laufrichtung 14, so dass das Anschiebelement 14b eine Bewegungskomponente quer zur Laufrichtung 14 erhält und das Stückgut 4 angeschoben vom Anschiebelement 12b seitlich ausgeschleust wird. Die Stückgüter 4 werden seitlich auf mit gleicher Fördergeschwindigkeit wie die Tragmittel 18' der Manipulationsförderstrecke 8b bewegte Tragmittel 18' ausgeschleust. Durch Auseinanderziehen der beiden Laufelemente 12a einer Laufelementeinheit 12 bringt das Anschiebelement 12b wieder in Ausgangsstellung.

Die Führungsvorrichtung 10 der linearen Antriebstechnik kann sowohl als horizontal umlaufender Kreislauf (Figuren 5, 8-11) als auch linear angeordnet sein. Bei Bedarf kann auch die Möglichkeit vorgesehen werden, die Anzahl der aktiven Laufelementeinheiten 12 dem aktuellen Durchsatz anzupassen und nicht verwendete Laufelementeinheiten 12 außerhalb der Führungsschiene der Führungsvorrichtung 10 oder vor dem Beginn des Manipulationsbereichs 6a auf der Führungsschiene selber zu speichern. Je höher der aktuelle Durchsatz, desto mehr Laufelementeinheiten 12 werden benötigt. Die Anzahl der Laufelementeinheiten 12 ist allerdings nach oben dadurch beschränkt, dass gewährleistet werden sollte, dass sich zu viele Laufelementeinheiten 12 auch gegenseitig behindern können.

Durch dieses Konzept ist die Laufelementeinheit 12 nicht an eine Ausschleusposition 18', 20 (Endstelle 20 / Tragelement 18') gebunden, sondern kann mehrere Ausschleuspositionen 18', 20 nacheinander versorgen. Die hohen realisierbaren Beschleunigungen der Laufelementeinheiten 12 machen ein schnelles Umpositionieren einer Laufelementeinheit 12 zwischen zwei Ausschleuspositionen 18', 20 möglich.

Das seitliche Ausschleusen als Stückgutübergabe von Manipulationsförderstrecke 8b und Endstelle 20 / Tragelement 18 erfolgt indem der Laufelementeinheit 12 eine Bewegungskomponente quer zur Flussrichtung 14 aufgeprägt wird.

Die Erfindung ermöglicht das seitliche Ausschleusen von einem Tragmittel 18, ohne dass dieses ein aktives Lastaufnahmemittel mit sich führen muss. Dafür werden die Laufelementeinheiten als Pusher entlang einer Führungsvorrichtung 10 mit linearer Antriebstechnik bewegt, wodurch mehrere Ausschleuspositionen 18', 20 versorgt werden können. Die Kosteneinsparung steigt mit der Anzahl der eingesetzten Tragmittel 18. Interessant ist diese Lösung daher insbesondere bei langen Sortern mit relativ wenig Ausschleuspositionen 18', 20.

In Figur 5 gezeigt ist eine vollständig horizontal angeordnete Führungsvorrichtung 10. Ein vertikaler Umlauf der Laufelemente 12 mit zwei beidseitig von der Manipulationsförderstrecke 8b angeordneten Führungsvorrichtungen 10 bietet sich an, wenn beidseitig von der Führungsvorrichtung 10 linear Endstellen 20 angeordnet sind wie in Figur 6, so dass eine Line-Sorter realisiert ist. Hierzu müssen die Führungsvorrichtungen 10 im Manipulationsbereich 6 auf Höhe oder unterhalb der Förderstrecke 8 angeordnet werden und die Bewegung gegenüberliegender Laufelementeinheiten 12 aufeinander abgestimmt werden, so dass sie kein Hindernis bei der Ausschleusung darstellen. Die Förderstrecke 8 ist mit aktiver Fördertechnik ausgestattet, beispielsweise einem Förderband. Der Manipulationsbereich 6 beider Führungsvorrichtungen 10 stimmt überein.

Figur 7 zeigt eine Stückgutsortierung auf aktiven Laufflächen 8 mit umlaufenden Laufelementeinheiten 12 mit ebenfalls linearen Anschiebelementen 12b die nur zu seitlichen Ausschleusung und nicht für die Mitnahme entlang der Laufrichtung 14 ausgestaltet sind. Der Transport der Stückgüter 4 entlang der Flussrichtung 14 der zwei Manipulationsförderstrecken 8b wird von den beiden aktiven Laufflächen, beispielsweise Transportbändern, durchgeführt. Eine horizontal umlaufende Führungsvorrichtung 10 weist entlang zweier Abschnitte zwei verschiedene Manipulationsbereiche 6 auf. Die Position der Laufelementeinheiten 12, insbesondere der Anschiebelemente 12b, entlang und quer zur Führungsvorrichtung 10 wird wie in den Figuren 5 und 6 mit linearer Antriebstechnik geregelt.

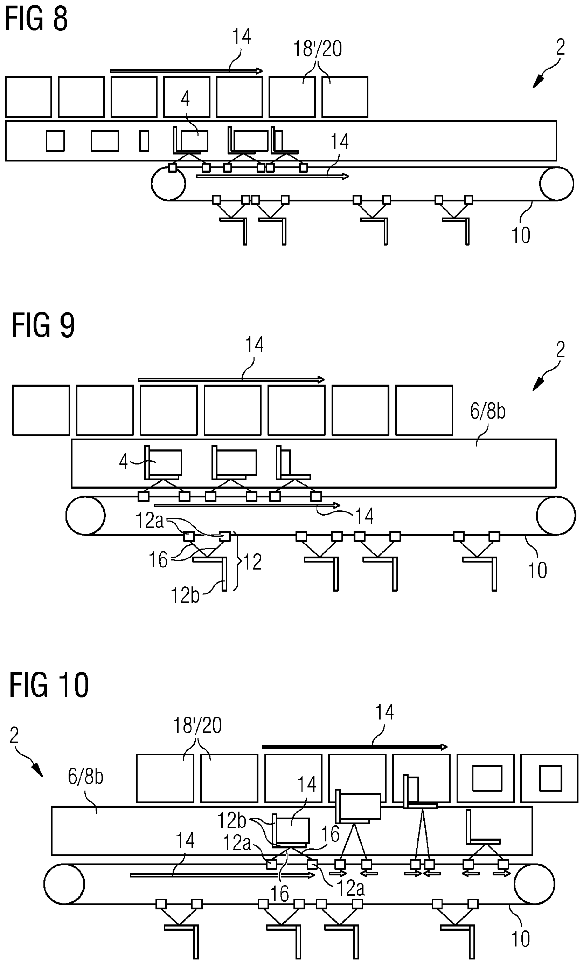

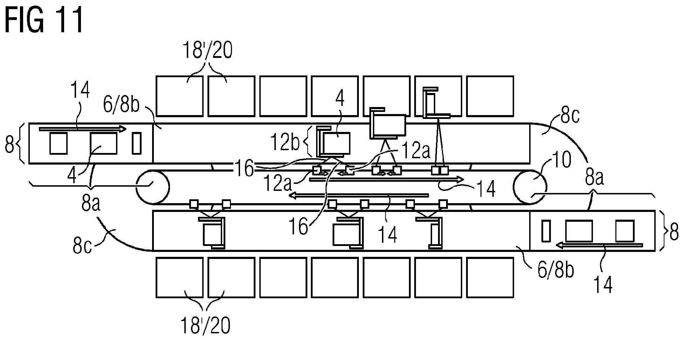

Die Form der zum Anschieben - seitlich und/oder quer zur Führungsvorrichtung (10) - der Stückgüter (4) ausgestalteten Anschiebelemente 12b, beispielsweise Haken-, U- oder L-förmig oder linear, bestimmt die mögliche Funktionalität: Die Laufelementeinheiten der Figuren 5 bis 7 agieren als Pusher 12b für seitliches Ausschleusen und nicht als Mitnahmeelemente zum Fördern entlang der Laufrichtung 14. Die Laufelementeinheiten 12 der Figuren 8 bis 11 agieren als Pusher für seitliches Ausschleusen und als Mitnahmeelemente, wobei bei Figur 11 aufgrund der U-Form des Anschiebelements 12b ein seitliches Ausschleusen nur möglich ist, wenn das Tragmittel 18' bzw. die Endstelle 20 unterhalb der Manipulationsförderstrecke 8b angeordnet ist. Die Laufelementeinheiten 12 der Figuren 2 bis 4 eignen sich nur für ein Anschieben und eine Manipulation eines Stückguts 4 von hinten und somit kann das Stückgut 4 die Manipulationsförderstrecke 8b auch nur in Flussrichtung 14 verlassen.

Wenn die Laufelementeinheiten 12 nur als Pusher fungieren, werden diese erst aktiv, wenn ein Stückgut auf Höhe der richtigen Ausschleusposition, hier der richtigen Endstelle 20 oder dem richtigen Tragmittel 18' angekommen ist. Es ist jedoch auch mögliche, dass die Laufelementeinheiten 12 bereits vor dem seitlichen Ausschleusen neben dem auszuschleusenden Stückgut 4 entlang der Flussrichtung 14 geführt werden. Den eigentlichen Stückguttransport übernimmt eine aktive Fördertechnik. Das Zusammenschieben der beiden Laufelemente 12a einer Laufelementeinheit 12 verschiebt das Anschiebelement 12b und damit das Stückgut 4 quer zur Laufrichtung 14 in Richtung Endstelle 20.

Diese Art der Sortierung kann sowohl als Linear-Sorter als auch als Loop-Sorter verwendet werden. Generell muss unterschieden werden, ob die Laufelementeinheiten 12 auch den Stückguttransport übernehmen (passive Lauffläche 8b unter den Stückgütern 4) oder nur als Pusher 12 fungieren und der Stückguttransport durch aktive Fördertechnik realisiert wird. Wenn die Laufelementeinheiten 12 auch den Stückguttransport übernehmen, wird für jedes Stückgut eine eigene Laufelementeinheit 12 benötigt. Wenn die Laufelementeinheiten 12 nur als Pusher 12 fungieren, sind weniger Laufelementeinheiten 12 erforderlich.

In den Figuren 8 bis 11 übernehmen die Laufelementeinheiten 12 auch den Stückguttransport entlang der Flussrichtung 14 oder sind zumindest hierzu geeignet. So kann auf jedem Tragmittel 18 ein aktives Lastaufnahmemittel eingespart werden. Realisiert werden kann ein Sorter mit linear angetriebenen Laufelementeinheiten 12, die über die Ausschleusung hinaus auch für den eigentlichen Stückguttransport eingesetzt werden, indem die Stückgüter 4 formschlüssig auf einem passiven Untergrund transportiert werden. Dadurch sind keine separaten Tragmittel 18 erforderlich, wodurch die Stückgüter 4 lückenoptimiert auf einer aktiven oder passiven Transportfläche 8b sortiert werden können.

Insbesondere bei schwer transportierbaren Stückgütern 4, beispielsweise mit hohen Reibungskoeffizienten auf der Manipulationsförderstrecke 8b, ist es vorteilhaft, wenn sowohl die Manipulationsförderstrecke 8b, als auch die Laufelementeinheiten 12 zum Fördern entlang der Flussrichtung 14 beitragen können.

Die Stückgüter 4 werden in den Anfang des Manipulationsbereichs 6a eingebracht und anschließend von den Laufelementeinheiten 12 formschlüssig aufgenommen und anschließend angeschoben. Mögliche mechanische Konfigurationen der Anschiebelemente 12b sind beispielsweise U-Form (Figur 11) und L-Form (Figuren 8 bis 10). Durch die formschlüssige Aufnahme von hinten, unterstützt durch die seitliche (hin zur Führungsvorrichtung 10) Begrenzung, werden eventuelle Verdrehungen des Stückguts 4 eliminiert. Durch das seitliche Anlegen der Laufelementeinheit 12 können die Stückgüter 4, wenn erforderlich, auch seitlich ausgerichtet werden. Eine U-Form des Anschiebelements 12b verhindert, dass das Stückgut bei Kurvenfahrt der Laufelementeinheit 12 nach außen verloren geht.

Falls erforderlich beschleunigen die Laufelementeinheiten 12 nach Einbringen in den Manipulationsbereich 6, um in Wirkübereinstimmung mit einem Stückgut 4 gebracht zu werden. ein Stückgut 4 aufzunehmen und falls weiter erforderlich nach der Aufnahme des Stückguts 4 und fahren an den Endstellen 20 vorbei bis zur richtigen Ausschleusposition, also bis zur Abgabe des Stückguts 4 durch die Laufelementeinheit 12 an das richtige Tragmittel 18' bzw. die richtige Endstelle 20. Das Ausschleusen erfolgt entweder nebenher bei voller Geschwindigkeit (dies insbesondere dann, wenn auf bewegte Tragmittel 18' ausgeschleust wird) oder auch bei reduzierter Geschwindigkeit. Es können auch gleichzeitig mehrere Laufelementeinheiten 12 auf unterschiedliche Tragmittel 18' oder Endstellen 20 ausschleusen.

Da der Abstand einander nachfolgender Laufelementeinheiten 12 frei wählbar ist, wird die mögliche Anzahl Stückgüter 4 im Manipulationsbereich 6 jeweils in Wirkverbindung bzw. -übereinstimmung mit einer Laufelementeinheit 12 von der Stückgutlänge in Flussrichtung 14 bestimmt.

Bei den Ausführungsformen der Figuren 5 bis 11 sind die Ausschleuspositionen 18', 20 als fest positionierte Endstellen 20 oder als entlang der Flussrichtung 14 bewegte Tragmittel 18' in der Art eines Quergurtsortercarriers vorgegeben. Wenn Stückguter aus dem Manipulationsbereich 6 seitlich auf bewegte Tragmittel 18' ausgeschleust werden, ist eine besonders genaue Ansteuerung der Laufelementeinheiten 12 erforderlich. In Vorbereitung auf die Induktion werden die Stückgüter 4 durch die Laufelementeinheiten 12 formschlüssig aufgenommen (Figur 8). Sobald ein freies Tragmittel 18' allokiert ist, wird die jeweilige Laufelementeinheit 12 auf Geschwindigkeit des Tragmittels 18' beschleunigt und dann mit dieser Geschwindigkeit konstant weiterbewegt (Figur 9). Dieser Vorgang kann für mehrere Laufelementeinheiten 12 gleichzeitig erfolgen.

Wenn Laufelementeinheit 12 und bewegtes Tragmittel 18' auf gleicher Höhe sind und die gleiche Geschwindigkeitskomponente entlang der Flussrichtung 14 aufweisen, wird das Stückgut von der Laufelementeinheit 12 an das Tragmittel 18' durch Zusammenschieben der Laufelemente 12a (Bewegung relativ zur Geschwindigkeit der Laufelementeinheit 12) übergeben, wodurch das Stückgut orthogonal zur Förderrichtung 14 der Führungsvorrichtung 10 bzw. der Laufelementeinheit 12 bewegt und an das Tragmittel 18' übergeben wird (Figur 10). Damit übernimmt die Laufelementeinheit 12 den Part einer aktiven Einheit, wodurch die Tragmittel 18, 18' ohne eigene aktive Lastaufnahmemittel ausgeführt werden. Je mehr Tragmittel im Einsatz sind, umso eher lohnt sich diese externe aktive Einheit der Laufelementeinheit 12 mit linearer Antriebstechnik. Anschließend werden die Laufelemente 12a auseinander bewegt, um die Laufelementeinheit 12 in die Ausgangsstellung zu überführen.

Lineare Antriebstechnik wird verwendet um Laufelementeinheiten 12 als externe Einheit zur seitlichen Übergabe an feste Endstellen 20 und/oder bewegte Tragmittel 18' heranzuziehen. Dadurch können die Tragmittel 18, 18' komplett auf eigene aktive Einheiten verzichten. Besonders an dieser Lösung ist, dass sowohl ein Transport entlang einer Flussrichtung 14 als auch die seitliche Ausschleusung von Stückgütern 4 mit nur einer Laufelementeinheit 12 befestigt an einer Führungsvorrichtung 10 realisiert werden können. Stückgüter 4 können mit dieser Lösung sehr kompakt gepuffert werden, bevor ein Tragmittel 18' allokiert ist. Anschließend wird das Stückgut 4 durch die Laufelementeinheit 12 und/oder durch eine aktive Manipulationsförderstrecke 8b beschleunigt und zum Tragmittel 18' bzw. zur Endstelle 20 synchronisiert hinsichtlich Position und/oder Geschwindigkeit. Durch diese Art der Induktion können mehrere Stückgüter zeitgleich induziert werden, wenn die entsprechenden Tragmittel 18' bzw. Endstellen 20 frei sin. Ein weiterer Vorteil besteht darin, dass die Stückgüter 4 sehr genau und orthogonal zum Tragmittel 18' ausgerichtet übergeben werden können.

Der Manipulationsbereich 6 mit Manipulationsförderstrecke 8b und Führungsvorrichtung 10 sind der Übersichtlichkeit halber in allen gezeigten Figuren linear, können jedoch auch um Ecken und/oder Kurven geführt werden.

### Bezugszeichenliste

- 2: Fördersystem
- 4: Stückgut
- 6: Manipulationsbereich
- 6a: Anfang des Manipulationsbereichs (stromaufwärts)
- 6b: Ende des Manipulationsbereichs (stromabwärts)
- 8: Förderstrecke
- 8a: Zuführförderstrecke
- 8b: Manipulationsförderstrecke
- 8c: Abführförderstrecke
- 10: Führungsvorrichtung
- 12: Laufelementeinheit
- 12a: Laufelement
- 12b: Anschiebelement
- 14: Lauf-/Flussrichtung
- 16: Verbindungsstange
- 18: Tragmittel
- 20: Endstellen

## Patentansprüche

1. Verfahren zum Manipulieren von Stückgütern (4), insbesondere Paketen und Gepäckstücken, in einem Manipulationsbereich (6) eines Fördersystem (2), umfassend eine Förderstrecke (8) und eine umlaufende Führungsvorrichtung (10) mit Antriebsmitteln und Laufelementeinheiten (12), wobei
- die Laufelementeinheiten (12) in einer Flussrichtung (14) entlang der Führungsvorrichtung (10) mit individuell ansteuerbarer Geschwindigkeit bewegbar befestigt und von der Führungsvorrichtung (10) antreibbar sind;
- der Manipulationsbereich (6) entlang und insbesondere auch auf einem Abschnitt der Führungsvorrichtung (10) angeordnet ist;
- die Förderstrecke (8) durch den Manipulationsbereich (6) hindurchführt und zumindest teilweise entlang der Führungsvorrichtung (10) angeordnet ist;
umfassend die Verfahrensschritte
a) Einbringen eines Stückguts (4) auf der Förderstrecke (8) und Einbringen einer der Laufelementeinheiten (12) stromaufwärts in den Manipulationsbereich (6);
b) Bewegen einer der Laufelementeinheiten (12) hin zu dem Stückgut (4), so dass ein Berührungskontakt hergestellt wird;
c) Bewegen der Laufelementeinheit (12) stromabwärts mit einer Bewegungskomponente entlang der Führungsvorrichtung (10);
d) Manipulieren des Stückguts (4) im Manipulationsbereich (6) durch Bewegen der Laufelementeinheit (12) im Berührungskontakt mit dem Stückgut (4) mit Bewegungskomponenten entlang und/oder quer zur Führungsvorrichtung (10), so dass eine definierte Lücke und/oder Teilung zwischen einander nachfolgenden Stückgütern (4) eingestellt und/oder eine Ausrichtung und/oder Position des Stückguts (4) verändert wird;
e) Antreiben der Laufelementeinheit (12), so dass die Laufelementeinheit (12) das Stückgut (4) aus dem Manipulationsbereich (6) hinausschiebt;
f) die Laufelementeinheit (12) verlässt stromabwärts den Manipulationsbereich (6);
g) Bewegen der Laufelementeinheit (12) entlang der Führungsvorrichtung (10) außerhalb des Manipulationsbereichs (6) bis vor den Anfang des Manipulationsbereichs (6).

2. Verfahren nach Anspruch 1, zudem umfassend den Verfahrensschritt
Bewegen der Laufelementeinheit (12) im Berührungskontakt mit dem Stückgut (4) mit einer Bewegungskomponente quer zur Führungsvorrichtung (10) innerhalb des Manipulationsbereichs (6), so dass das Stückgut (4) seitlich zur Flussrichtung (14) aus dem Manipulationsbereich (6) ausgeschleust wird.

3. Verfahren nach einem der vorangehenden Ansprüche, **dadurch gekennzeichnet, dass**
eine Laufelementeinheit (12) jeweils ein oder zwei individuell entlang der Führungsvorrichtung (10) bewegbare Laufelemente (12a) und mindestens ein Anschiebelement (12b) aufweist, wobei das Anschiebelement (12b) derart mit den zwei Laufelementen (12a) verbunden ist, dass eine Veränderung des Abstands zwischen den zwei Laufelementen (12a) das Anschiebelement (12b) quer zur Flussrichtung (14) bewegt.

4. Verfahren nach einem der vorangehenden Ansprüche, zudem umfassend den Verfahrensschritt
Bewegen der Laufelementeinheit (12) durch Erzeugung elektromagnetischer Wanderfelder mit von den Antriebsmittel umfassten elektromagnetischen Spulen, wobei die Laufelementeinheit (12) einen Magnet umfasst.

5. Verfahren nach einem der vorangehenden Ansprüche, **dadurch gekennzeichnet, dass**
die Förderstrecke (8) abschnittsweise zum aktiven und/oder passiven Fördern eines Stückguts (4) ausgestaltet ist.

6. Verfahren nach einem der vorangehenden Ansprüche, zudem umfassend den Verfahrensschritt
im Manipulationsbereich (6) Anschieben und/oder Veränderung der Ausrichtung des Stückguts (4) durch Berührungskontakt mit der Laufelementeinheit (12).

7. Verfahren nach einem der vorangehenden Ansprüche, **dadurch gekennzeichnet, dass**
das Fördersystem (2) mehr als eine Führungsvorrichtung (10) nach einem der vorangehenden Ansprüche umfasst, wobei die zweite Führungsvorrichtung (10) zumindest teilweise entlang dem Manipulationsbereich (6) gegenüber der ersten Führungsvorrichtung (10) angeordnet ist oder einen eigenen Manipulationsbereich (6) aufweist.

8. Verfahren nach einem der vorangehenden Ansprüche, umfassend den Verfahrensschritt
aufeinander abgestimmtes Bewegen von zwei oder mehr Laufelementeinheiten (12), insbesondere von einander nachfolgenden Laufelementeinheiten (12).

9. Fördersystem (2) zum Manipulieren von Stückgütern (4), insbesondere Paketen und Gepäckstücken, umfassend eine umlaufende Führungsvorrichtung (10) mit linearem Antriebsmittel und Laufelementeinheiten (12), einen Manipulationsbereich (6) und eine Förderstrecke (8), wobei
a) die Laufelementeinheiten (12) an der Führungsvorrichtung (10) bewegbar befestigt und von dem Antriebsmittel der Führungsvorrichtung (10) mit individuell ansteuerbarer Geschwindigkeit in einer Flussrichtung (14) entlang der Führungsvorrichtung (10) antreibbar sind;
b) der Manipulationsbereich (6) entlang und insbesondere auch auf einem Abschnitt der Führungsvorrichtung (10) angeordnet ist;
c) die Förderstrecke (8) durch den Manipulationsbereich (6) hindurchführt und im Manipulationsbereich (6) zum aktiven oder passiven Fördern der Stückgüter (4) ausgestaltet ist;
d) jede Laufelementeinheit (12) außerhalb des Manipulationsbereichs (6) auf der Führungsvorrichtung (10) hin zu einem vor einem stromaufwärts angeordneten Bereich des Manipulationsbereichs (6) bewegbar ist;
e) jede Laufelementeinheit (12) ausgestaltet ist zum Manipulieren eines Stückguts (4) im Manipulationsbereich (6) durch Bewegen der Laufelementeinheit (12) im Berührungskontakt mit dem Stückgut (4) mit Bewegungskomponenten entlang und/oder quer zur Führungsvorrichtung (10), so dass eine definierte Lücke und/oder Teilung zwischen einander nachfolgenden Stückgütern (4) eingestellt und/oder eine Ausrichtung und/oder Position des Stückguts (4) verändert wird;
f) jede Laufelementeinheit (12) ausgestaltet ist, ein Stückgut (4) seitlich und/oder stromabwärts aus dem Manipulationsbereich (6) hinaus zu schieben.

10. Fördersystem (2) nach Anspruch 9, **dadurch gekennzeichnet, dass**
die Laufelementeinheiten (12) Magnete und das Antriebsmittel elektromagnetische Spulen umfassen, um die Laufelementeinheiten (12) durch Erzeugung elektromagnetischer Wanderfelder zu bewegen.

11. Fördersystem (2) nach einem der Ansprüche 9 bis 10, **dadurch gekennzeichnet, dass**
eine Laufelementeinheit (12) jeweils ein oder zwei individuell entlang der Führungsvorrichtung (10) bewegbare Laufelemente (12a) und mindestens ein Anschiebelement (12b) aufweist, wobei das Anschiebelement derart mit den zwei Laufelementen (12a), insbesondere über gelenkartig angebrachte Verbindungsstangen, verbunden ist, so dass eine Veränderung des Abstands zwischen den Laufelementen (12a) das Anschiebelement (12b) quer zur Flussrichtung (14) bewegt.

12. Fördersystem (2) nach einem der Ansprüche 9 bis 11, **dadurch gekennzeichnet, dass**
das Fördersystem (2) zwei Führungsvorrichtungen (10) aufweist, die zumindest teilweise auf gegenüberliegenden Seiten des Manipulationsbereich (6) angeordnet sind oder die jeweils eigene Manipulationsbereiche (6) und eigene Förderstrecken (8) aufweisen.

13. Fördersystem (2) nach einem der Ansprüche 9 bis 12, **dadurch gekennzeichnet, dass**
die Förderstrecke (8) im Manipulationsbereich (6) hintereinander angeordnete Tragmittel aufweist.

14. Fördersystem (2) nach einem der Ansprüche 11 bis 13, **dadurch gekennzeichnet, dass**
das Schiebelement zum Anschieben der Stückgüter (4) seitlich und/oder quer zur Führungsvorrichtung (10) mit mindestens einem Anschiebelement, welches beispielsweise Haken-, U- oder L-förmig oder linear ist, ausgestaltet ist.

15. Fördersystem (2) nach einem der Ansprüche 9 bis 14, **dadurch gekennzeichnet, dass**
die Führungsvorrichtung (10) außerhalb des Manipulationsbereich (6) auf Höhe oder unterhalb der Förderstrecke (8) angeordnet ist.
